# FASCICULE DE BREVET EUROPEEN

(11) **EP 2 070 139 B1**
(45) Date de publication et mention de la délivrance du brevet: **01.09.2010**
(21) Numéro de dépôt: 07848215.5
(22) Date de dépôt: 11.09.2007
(51) Int. Cl.: H01M 4/32, H01M 4/52, H01M 4/62, H01M 4/02, H01M 10/24

(54) **ELECTRODE PLASTIFIEE POUR ACCUMULATEUR ALCALIN**
PLASTIFIZIERTE ELEKTRODE FÜR EINE ALKALI-BATTERIE
PLASTIFIED ELECTRODE FOR ALKALINE BATTERY

(30) Priorité: 15.09.2006 FR 0608092
(43) Date de publication de la demande: 17.06.2009
(73) Titulaire: SAFT GROUPE SA, 93170 Bagnolet (FR)
(72) Inventeur: BERNARD, Patrick, F-33000 Bordeaux (FR); GOUBAULT, Lionel, F-33700 Merignac (FR)
(74) Mandataire: Hirsch, Marc-Roger
(86) Numéro de dépôt international: PCT/FR2007/001460
(87) Numéro de publication internationale: WO 2008/031936

(56) Documents cités:
- EP-A- 1 255 313
- EP-A1- 0 982 787
- EP-A1- 1 435 673
- WO-A-2004/093213
- JP-A- 9 063 572
- JP-A- 9 147 849
- JP-A- 9 330 710
- JP-A- 53 070 347
- JP-A- 53 074 247
- US-A- 4 419 424
- DATABASE INSPEC [Online] mai 2005 (2005-05), H. FUKUNAGA ET AL.: "A nickel electrode with Ni-coated 3D steel sheet for hybrid electric vehicle applications" XP002430300 Database accession no. 8460316 & JOURNAL OF THE ELECTROCHEMICAL SOCIETY, vol. 152, no. 5, 30 mars 2005 (2005-03-30), pages A905-A912, ISSN: 0013-4651 cité dans la demande

## Description

### DOMAINE TECHNIQUE

La présente invention concerne une électrode plastifiée pour un accumulateur à électrolyte alcalin, comme par exemple un accumulateur nickel-cadmium (NiCd) ou nickel-métal hydrure (NiMH). Elle s'étend en outre à l'accumulateur contenant une telle électrode.

### ETAT DE LA TECHNIQUE

Il existe plusieurs types d'électrodes susceptibles d'être utilisées dans un accumulateur à électrolyte alcalin, tels que les électrodes frittées et les électrodes non frittées. Par rapport aux autres types d'électrodes, une électrode non frittée contient une plus grande quantité de matière, sa capacité volumique est donc augmentée, et son coût de fabrication est plus faible.

Une électrode non-frittée se compose d'un support servant de collecteur de courant sur lequel on enduit une pâte contenant la matière active et un liant, à laquelle on ajoute le plus souvent un matériau conducteur. Une fois la pâte déposée sur ou dans le support, l'ensemble est comprimé et séché pour obtenir une électrode de la densité et de l'épaisseur souhaitée.

Parmi les électrodes non-frittées, on distingue l'électrode de type mousse de nickel qui possède un support tridimensionnel, et l'électrode plastifiée qui possède un support sous forme d'une feuille de métal perforé ou de métal déployé.

Une analyse des coûts par composants d'un accumulateur NiMH conventionnel fait apparaître que le substrat de l'électrode positive, de type mousse de nickel, donc tridimensionnel, représente plus de 50% du coût de l'électrode actuelle. Or, la généralisation de la technologie NiMH dans des applications telles que le véhicule électrique hybride nécessite des réductions de coût importantes des accumulateurs.

C'est pourquoi, l'utilisation d'un support bidimensionnel est parfois préférée à celle d'un conducteur tridimensionnel.

La cohésion de la matière active et son adhérence au support bidimensionnel sont généralement améliorées par l'addition d'un liant. Ce liant peut être un copolymère de styrène-acrylate. Des électrodes positives de technologie plastifiée comportant un liant à base de styrène-acrylate ont été développées. Ce liant n'est pas stable au potentiel de l'électrode positive. Il subit une réaction d'oxydation, ce qui génère en parallèle une réaction de réduction à l'électrode négative. En conséquence, l'oxydation du liant entraîne une diminution de la capacité négative excédentaire, proportionnellement à la quantité d'électron générée par la réaction d'oxydation du liant. Lorsque l'excédent de capacité négative devient nul, l'électrode négative génère de l'hydrogène gazeux en charge, la pression dans l'élément augmente jusqu'à l'ouverture de la soupape de sécurité. Il s'en suit un assèchement et la fin de vie de l'accumulateur.

L'article paru dans Journal of The Electrochemical Society (152 (5) A905-A912 (2005)) divulgue en effet une électrode positive d'accumulateur nickel métal hydrure comprenant un feuillard d'acier nickelé tridimensionnel et un liant de type styrène-acrylate. Cependant la durée de vie de cet accumulateur est de 1000 cycles à 25°C et de seulement 180 cycles à 45°C en raison de la décomposition du styrène-acrylate.

Des compositions d'électrode positive comprenant une matière active et un liant constitué d'un copolymère d'éthylène-acétate de vinyle (EVA) sont divulguées dans les documents JP 53 070347 A, US-A-4 419 424, EP-A1-1 435 673, WO 2004/093213 A et JP 09 330710 A, mais un aucun d'entre eux ne décrit l'utilisation d'une faible quantité de ce liant.

La demande européenne EP-A-1 255 313 divulgue par ailleurs une électrode non-frittée comportant un support conducteur bidimensionnel métallique et une pâte comprenant une matière électrochimiquement active et un liant constitué d'un mélange d'un copolymère du butadiène avec un copolymère EVA.

On cherche donc un accumulateur alcalin comprenant une électrode positive plastifiée et présentant une durée de vie en cyclage et/ou une durée de vie calendaire améliorée.

### RESUME DE L'INVENTION

L'invention concerne une électrode comprenant un support conducteur métallique et une pâte comprenant une matière électrochimiquement active et un liant ;
- le liant comprenant au moins un copolymère d'éthylène-acétate de vinyle représentant 0,25-1% en poids du poids de ladite pâte,
- le liant ne comprenant ni polystyrène, ni copolymère de butadiène.

L'invention s'étend à un accumulateur à électrolyte alcalin comprenant une telle électrode.

L'utilisation du copolymère d'éthylène-acétate de vinyle améliore la durée de vie de l'accumulateur en cyclage et/ou la durée de vie calendaire.

Selon un mode de réalisation, le copolymère d'éthylène-acétate de vinyle représente au moins 30%, de préférence au moins 50%, de préférence au moins 75 %, de préférence encore au moins 80%, de préférence encore au moins 90%, de préférence encore au moins 95% du poids du liant.

Selon un mode de réalisation, le pourcentage en poids du groupe acétate de vinyle représente 10-95%, de préférence 50-95%, de préférence encore 70-90% du poids du copolymère d'éthylène-acétate de vinyle.

Selon un mode de réalisation, le copolymère d'éthylène-acétate de vinyle représente 0,25-0,8% en poids, de préférence 0,25-0,5 % en poids du poids de ladite pâte.

Selon un mode de réalisation, le liant contient un polymère fluoré, qui peut être le polytétrafluoroéthylène.

Selon un mode de réalisation, le liant contient un polymère à fonction acrylate, qui peut être choisi dans le groupe comprenant un copolymère de styrène-acrylate, un poly(méth)acrylate, un copolymère de styrène-anhydride maléique.

Selon un mode de réalisation, le liant contient un composé de type silane.

Selon un mode de réalisation, l'électrode comprend en outre des fibres, qui peuvent être des fibres de polypropylène.

Selon un mode de réalisation, la quantité de fibres ajoutées est inférieure à environ 1,5 % du poids de la pâte.

Selon un mode de réalisation, le collecteur de courant est bidimensionnel.

Selon un mode de réalisation, l'électrode est l'électrode positive d'un accumulateur alcalin.

Selon un mode de réalisation, la matière électrochimiquement active est un composé à base d'hydroxyde de nickel.

Selon un mode de réalisation, l'électrode est l'électrode négative d'un accumulateur alcalin.

L'invention propose également une électrode comprenant un support conducteur métallique et une pâte comprenant une matière électrochimiquement active et un liant ;
- le liant comprenant au moins un copolymère d'éthylène-acétate de vinyle en une proportion en poids d'environ 0,25 % à 1 % par rapport au poids de ladite pâte,
- le copolymère d'éthylène-acétate de vinyle représentant au moins 80 % du poids du liant.

Le liant selon l'invention est avantageusement utilisé pour les électrodes de types empâtées (non frittées) qui possèdent une cohésion mécanique moindre qu'une électrode frittée. La tenue mécanique d'une électrode frittée est liée à sa structure qui contient une grande quantité de nickel fritté. Cette technologie ne nécessite pas de liant pour assurer la tenue mécanique de l'électrode.

### EXPOSE DETAILLE DE MODES DE REALISATION DE L'INVENTION

On fabrique l'électrode selon l'invention en déposant sur un collecteur de courant une pâte comprenant le liant selon l'invention et la matière active. Avantageusement, on ajoute à cette pâte avant application sur le collecteur de courant, un conducteur électronique, un ou plusieurs épaississants et des fibres. Ces différents constituants vont maintenant être décrits.

Le liant est le constituant de la pâte qui caractérise l'invention. Ce liant comprend au moins un copolymère d'éthylène-acétate de vinyle (EVA). Il peut aussi comprendre un mélange de copolymères d'éthylène-acétate de vinyle.

Un copolymère d'éthylène-acétate de vinyle peut être représenté par la formule générale suivante : 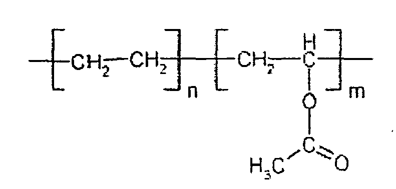 dans laquelle :
-CH₂-CH₂- représente un groupe éthylène,
-CH₂-CHOCOCH₃- représente un groupe acétate de vinyle.

Un autre exemple de copolymère d'éthylène-acétate de vinyle est le terpolymère d'éthylène - acétate de vinyle
- anhydride maléique représenté par la formule générale suivante :

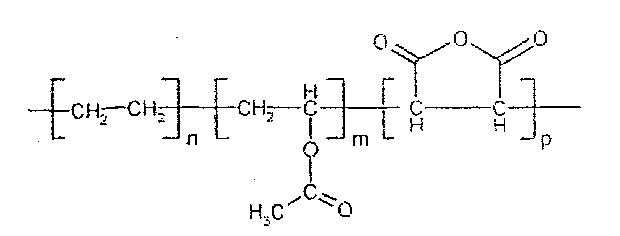

Selon un mode de réalisation, le copolymère d'éthylène-acétate de vinyle représente au moins 30%, de préférence au moins 50%, de préférence au moins 75 %, de préférence encore au moins 80%, de préférence encore au moins 90%, de préférence encore au moins 95% du poids du liant.

La présence de copolymère d'éthylène-acétate de vinyle permet d'assurer ainsi des propriétés mécaniques adéquates à l'électrode (élasticité, cohésion entre les grains de la matière active, et adhérence sur le collecteur de courant).

Selon un mode de réalisation, le pourcentage en poids du groupe acétate de vinyle représente 10-95%, de préférence 50-95%, de préférence encore 70-90% du poids du copolymère d'éthylène-acétate de vinyle.

L'augmentation du pourcentage en poids du groupe acétate de vinyle renforce le caractère adhésif du polymère. Pour un pourcentage en poids du groupe acétate de vinyle inférieur à 50%, il serait nécessaire d'augmenter la quantité de liant pour obtenir une tenue mécanique satisfaisante ce qui entraînerait une diminution de l'énergie volumique de l'électrode.

Selon un mode de réalisation, le copolymère d'éthylène-acétate de vinyle représente 0,25-1% en poids, de préférence 0,25-0,8% en poids, de préférence encore 0,25-0,5 % en poids du poids de ladite pâte.

L'augmentation du taux de liant entraîne une perte de capacité, d'une part parce que la proportion de matière active diminue d'autant, et d'autre part du fait du caractère isolant du liant.

Le ou les copolymères d'éthylène-acétate de vinyle peuvent être mélangés avec d'autre composés chimiques faisant partie du liant, tels que:
- un ou plusieurs polymères fluorés, tel que le polytétrafluoroéthylène (PTFE) ;
- un ou plusieurs polymères à fonction acrylate tel qu'un polyacrylate, un poly(méth)acrylate, un copolymère de styrène-acrylate, un copolymère de styrène-anhydride maléique ;
- un composé de type silane. Selon un mode de réalisation préféré, le composé de type silane est le glycidyloxypropyltrimethoxy-silane.

Le liant ne comprend ni polystyrène, ni copolymère de butadiène.

Selon un mode de réalisation, le liant ne comprend pas de copolymère de styrène-acrylate.

La matière active peut être un hydroxyde de nickel contenant au moins un élément choisi parmi Zn, Cd ou Mg et au moins un élément choisi parmi Co, Mn, Al, Y, Ca, Sr, Zr, Cu. De préférence, cet hydroxyde possède une forme sphéroïdale et présente une granulométrie comprise entre 7 et 25 µm. L'hydroxyde de nickel peut être de façon préférentielle recouvert par un revêtement à base d'hydroxyde de cobalt éventuellement partiellement oxydé, ou associé à un composé conducteur, constitué principalement de Co(OH)₂. D'autres composés tels que Co, CoO, LiCoO₂, poudres métalliques, carbones, ZnO, Y₂O₃, Yb₂O₃, Nb₂O₃, SrSO₄, Sr(OH)₂ peuvent être ajoutés à la matière active.

On mélange le liant avec le composé à base d'hydroxyde de nickel. On dépose ce mélange sur un collecteur de courant pour former l'électrode positive d'un accumulateur alcalin.

Alors qu'une électrode négative de type cadmium ou métal hydrure peut être réalisée avec de nombreuses familles de liant, l'électrode positive nécessite l'utilisation d'un liant spécifique pour assurer une bonne cohésion de la matière active. En effet, les matières actives positives et négatives sont très différentes du point de vue de leur surface développée et de la forme des grains de matière active. Les grains de matière active positive présentent une morphologie sphéroïdale et une surface développée élevée, de l'ordre de 20 m²/g. La matière active utilisée pour une électrode négative au cadmium ou au métal hydrure possède une surface développée environ 100 fois moins élevée que la matière active de l'électrode positive. Les grains de matière active négative présentent une morphologie aciculaire (en forme d'aiguille).

L'utilisation du liant selon l'invention permet d'assurer une bonne cohésion des grains de matière active positive.

Le collecteur de courant peut être un métal déployé en nickel ou un feuillard en acier nickelé, d'épaisseur comprise entre 20 µm et 100 µm, un feuillard en acier nickelé mis en forme tridimensionnelle, d'épaisseur totale comprise entre 100 et 700 µm. De préférence, le collecteur de courant est un support bidimensionnel.

Le composé conducteur peut être un composé du cobalt. De préférence, il est choisi dans le groupe comprenant CoO, Co ou Co(OH)₂.

L'épaississant peut être un polymère cellulosique tel que la carboxymethylcellulose (CMC), l'hydroxypropylmethylcellulose (HPMC), l'hydroxypropylcellulose (HPC), l'hydroxymethylcellulose (HEC). Il peut aussi être un polymère de type polyacideacrylique (PAAC) ou gomme xanthane.

Selon un mode de réalisation, des fibres conductrices ou non conductrices peuvent être ajoutées à la pâte. De préférence, la quantité de fibres ajoutée est inférieure à environ 1,5% du poids de la pâte. De préférence, il s'agit de fibres polymères de polypropylène, de diamètre compris entre 10 et 35µm et de longueur inférieure à 2mm.

La matière active peut aussi être du cadmium métallique, un composé intermétallique hydrurable de type AB₅, de type AB₂ ou de type ABₜ avec 3,2≤t≤3,5 ou toute matière active négative classique dans l'art des accumulateurs alcalin. On mélange le liant avec la matière active négative. On dépose le mélange sur un collecteur de courant pour former l'électrode négative d'un accumulateur alcalin.

On fabrique le faisceau électrochimique constitué par l'alternance d'électrodes positives et négatives séparées par un séparateur. Le séparateur peut être à base de fibres de polyoléfines non traitées, ou traitées par de l'acide acrylique, ou sulfonées, ou à base de fibres de polyamide.

Le faisceau électrochimique est introduit dans le conteneur de l'accumulateur.

Le conteneur est rempli d'électrolyte. L'électrolyte imbibe les séparateurs. L'électrolyte est une base forte comprenant généralement KOH et/ou NaOH et/ou LiOH.

L'accumulateur alcalin ainsi obtenu peut être de type nickel-cadmium ou nickel- métal hydrure.

L'accumulateur peut être de type cylindrique ou prismatique, ouvert, étanche (valve-regulated), pour des applications portables ou industrielles (automobile et éclairage de sécurité notamment).

### EXEMPLES

Un accumulateur étanche NiMH de format AA et dont la capacité nominale C est de 1200mAh est fabriqué de la manière suivante.

Une première électrode positive de référence (P1) est réalisée avec une pâte ayant comme composition pondérale:

| | |
|---|---|
| Matière électrochimiquement active | 88,2% |
| Matériau conducteur Co(OH)₂ | 10% |
| Liant PTFE | 1% |
| Polymère cellulosique CMC | 0,3% |
| Y₂O₃ | 0,5% |

La matière électrochimiquement active pulvérulente est constituée d'un hydroxyde à base de nickel, et contient les additifs suivants : cobalt et zinc. La viscosité de la pâte est ajustée avec de l'eau. La pâte est introduite dans un support conducteur tridimensionnel qui est une mousse de nickel de porosité d'environ 95%. Une fois la pâte introduite dans le support, l'ensemble est séché afin d'en éliminer l'eau, laminé puis découpé pour obtenir l'électrode aux dimensions désirées. L'électrode finie présente une porosité de 30% et un grammage de 16 g/dm².

Une électrode positive plastifiée de référence (P2) est réalisée avec une pâte ayant pour composition pondérale :

| | |
|---|---|
| Matière électrochimiquement active | 87,5% |
| Matériau conducteur Co(OH)₂ | 10% |
| Liant styrène-acrylate | 0,7% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contient les additifs suivants : cobalt et zinc. La viscosité de la pâte est ajustée avec de l'eau. La pâte est déposée simultanément sur les deux faces d'un support métallique bidimensionnel (acier nickelé perforé d'épaisseur 50µm) de manière homogène. L'ensemble est ensuite séché afin d'en éliminer l'eau, puis laminé à l'épaisseur désirée et découpée pour obtenir une électrode positive. L'électrode finie présente une porosité de 30% et un grammage de 16 g/dm².

Une électrode positive plastifiée de référence (P3) est réalisée avec une pâte ayant pour composition pondérale :

| | |
|---|---|
| Matière électrochimiquement active | 87,2% |
| Matériau conducteur Co(OH)₂ | 10% |
| Liant styrène-acrylate | 1% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contient les additifs suivants : cobalt et zinc. La viscosité de la pâte est ajustée avec de l'eau. La pâte est déposée simultanément sur les deux faces d'un support métallique bidimensionnel (acier nickelé perforé d'épaisseur 50µm) de manière homogène. L'ensemble est ensuite séché afin d'en éliminer l'eau, puis laminé à l'épaisseur désirée et découpée pour obtenir une électrode positive. L'électrode finie présente une porosité de 30% et un grammage de 16 g/dm².

Une électrode positive plastifiée de référence(P4) est réalisée avec une pâte ayant pour composition pondérale :

| | |
|---|---|
| Matière électrochimiquement active | 88,0% |
| Matériau conducteur Co(OH)₂ | 10% |
| Liant EVA | 0,2% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contient les additifs suivants : cobalt et zinc. La viscosité de la pâte est ajustée avec de l'eau. La pâte est déposée simultanément sur les deux faces d'un support métallique bidimensionnel (acier nickelé perforé d'épaisseur 50 µm) de manière homogène. L'ensemble est ensuite séché afin d'en éliminer l'eau, puis laminé à l'épaisseur désirée et découpée pour obtenir une électrode positive. L'électrode finie présente une porosité de 30% et un grammage de 16 g/dm².

Une électrode positive plastifiée selon l'invention (P5) est réalisée avec une pâte ayant pour composition pondérale :

| | |
|---|---|
| Matière électrochimiquement active | 87,5% |
| Matériau conducteur Co(OH)₂ | 10% |
| Liant EVA | 0,7% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. La pâte est déposée simultanément sur les deux faces d'un support métallique bidimensionnel (acier nickelé perforé d'épaisseur 50µm) de manière homogène. L'ensemble est ensuite séché afin d'en éliminer l'eau, puis laminé à l'épaisseur désirée et découpée pour obtenir une électrode positive. L'électrode finie présente une porosité de 30% et un grammage de 16g/dm².

Une électrode positive plastifiée selon l'invention (P6) est réalisée avec une pâte ayant pour composition pondérale :

| | |
|---|---|
| Matière électrochimiquement active | 87,2% |
| Matériau conducteur Co(OH)₂ | 10% |
| Liant EVA | 1% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contient les additifs suivants : cobalt et zinc. La viscosité de la pâte est ajustée avec de l'eau. La pâte est déposée simultanément sur les deux faces d'un support métallique bidimensionnel (acier nickelé perforé d'épaisseur 50µm) de manière homogène. L'ensemble est ensuite séché afin d'en éliminer l'eau, puis laminé à l'épaisseur désirée et découpée pour obtenir une électrode positive. L'électrode finie présente une porosité de 30% et un grammage de 16g/dm².

Une électrode positive plastifiée selon l'invention (P7) est réalisée avec une pâte ayant pour composition pondérale :

| | |
|---|---|
| Matière électrochimiquement active | 86,2% |
| Matériau conducteur Co(OH)₂ | 10% |
| Liant EVA | 2% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contient les additifs suivants : cobalt et zinc. La viscosité de la pâte est ajustée avec de l'eau. La pâte est déposée simultanément sur les deux faces d'un support métallique bidimensionnel (acier nickelé perforé d'épaisseur 50 µm) de manière homogène. L'ensemble est ensuite séché afin d'en éliminer l'eau, puis laminé à l'épaisseur désirée et découpée pour obtenir une électrode positive. L'électrode finie présente une porosité de 30% et un grammage de 16 g/dm².

Un test de tenue mécanique des électrodes est réalisé de la façon suivante : Chaque électrode est pesée, puis lâchée d'une hauteur de 50 cm sur une surface plane. La chute est répétée 10 fois. Puis l'électrode est pesée de nouveau. Le résultat du test est exprimé comme le ratio de la masse initiale moins la masse finale rapportée à la masse initiale. Une électrode sera d'autant plus solide que ce ratio sera faible et la tenue mécanique de l'électrode est considérée comme satisfaisante lorsque ce ratio est inférieur à 0,5%. Les résultats de test mécaniques sont indiqués dans le tableau 1 :

**Tableau 1**

| Electrode | P1 | P2 | P3 | P4 | P5 | P6 | P7 |
|---|---|---|---|---|---|---|---|
| Support | mousse | feuillard | feuillard | feuillard | feuillard | feuillard | feuillard |
| PTFE | 1% | - | - | - | - | - | - |
| Styrène-acrylate | - | 0,7% | 1% | - | - | - | - |
| EVA | - | - | - | 0,2% | 0,7% | 1% | 2% |
| Test (%) | 0,21 | 0,67 | 0,41 | 0,83 | 0,34 | 0,26 | 0,15 |

D'après le tableau 1, la réduction du taux de styrène-acrylate de 1% (P3) à 0,7% (P2) entraîne une dégradation significative de la tenue mécanique de l'électrode positive plastifiée alors qu'avec 0,7% d'EVA (P5), la tenue mécanique reste satisfaisante. Ainsi l'utilisation de l'EVA permet une réduction du taux de liant dans l'électrode de 30% sans dégradation de la tenue mécanique. Pour un taux d'EVA inférieur à environ 0,25% (P4), l'électrode devient trop fragile pour être spiralée sans observer des pertes de matière active.

Un accumulateur étanche NiMH de format AA, dont l'électrode positive est l'électrode limitante, et dont la capacité nominale est de 1200 mAh, est constitué des électrodes positives décrites ci-dessus et d'une électrode négative de type connu qui possède comme matière électrochimiquement active un composé intermétallique capable de formé un hydrure une fois chargé. L'électrode positive est accolée à une électrode négative dont elle est isolée par un séparateur non-tissé de polypropylène pour former le faisceau électrochimique. Le faisceau ainsi spiralé est inséré dans un godet métallique et imprégné d'un électrolyte alcalin qui est une solution alcaline aqueuse constituée d'un mélange d'hydroxyde de potassium KOH 7,5N, d'hydroxyde de sodium NaOH 0,4N et d'hydroxyde de lithium LiOH 0,5N pour constituer les accumulateurs A, B, C, D, E, F, G. La composition de chacun des accumulateurs est décrite dans le tableau 2.

**Tableau 2**

| Référence | A | B | C | D | E | F | G |
|---|---|---|---|---|---|---|---|
| Electrode Positive | P1 | P2 | P3 | P4 | P5 | P6 | P7 |
| Electrode Négative | N1 | N1 | N1 | N1 | N1 | N1 | N1 |

### Performances électrochimiques :

Après un repos de 48 heures à température ambiante, une formation électrique des accumulateurs est effectuée dans les conditions suivantes :

### Cycle 1 :

- Repos 2h à 80°C ;
- Charge à 0,025Ic pendant 8h à 80°C, où Ic est le courant nécessaire pour décharger la capacité nominale C de l'accumulateur en 1h ;
- Repos 2h à 20°C ;
- Charge 3h 0,33Ic ;
- Décharge à 0,2Ic jusqu'à une tension de 1V.

### Cycles 2 à 10 :

- Charge 16h au courant de 0,1Ic ;
- Décharge à 0,2Ic jusqu'à une tension de 1V.

### Cycle 11 :

- Charge 72 minutes au courant de Ic ;
- Décharge à Ic jusqu'à une tension de 1V.

Après les 11 cycles initiaux, la moitié des accumulateurs subit le test de cyclage 1 et l'autre moitié le test de cyclage 2.

### Test 1 :

- Charge pendant 66 minutes au courant de C à 20°C ;
- Décharge à Ic à 20°C jusqu'à une tension de 1V.

### Test 2 :

T=40°C

Conditions de cyclage :
- Charge 66 minutes C à 40°C ;
- Décharge à Ic à 40°C jusqu'à une tension de 1V.

La durée de vie des accumulateurs est déterminée par le nombre de cycles réalisé jusqu'à ce que la capacité de l'accumulateur devienne inférieure à 80% de sa capacité nominale.

Les résultats des tests électriques sont indiqués dans le tableau 3 :

**Tableau 3**

| Référence | A | B | C | D | E | F | G |
|---|---|---|---|---|---|---|---|
| Electrode Positive | P1 | P2 | P3 | P4 | P5 | P6 | P7 |
| Electrode Négative | N1 | N1 | N1 | N1 | N1 | N1 | N1 |
| Rendement de l'électrode positive au cycle 10 (mAh/g) | 253 | 225 | 247 | 207 | 250 | 254 | 241 |
| Rendement de l'électrode positive au cycle 11 (mAh/g) | 244 | 218 | 242 | 198 | 240 | 242 | 206 |
| Durée de vie au Test 1 | 734 | 340 | 725 | 223 | 735 | 728 | 740 |
| Durée de vie au Test 2 | 516 | 117 | 253 | 187 | 423 | 256 | 156 |

D'après les résultats indiqués dans le tableau 3, l'utilisation de 0,7% de styrène-acrylate dans l'électrode positive plastifiée (Ref :B) dégrade les performances électriques initiales probablement du fait de pertes de matière de l'électrode.

De même, lorsque le taux d'EVA est inférieur à 0,25% (Ref : D), la tenue mécanique est insuffisante pour obtenir des performances et une durée de vie satisfaisantes.

En revanche avec 0,7% d'EVA (Ref :E), les performances électriques initiales sont équivalentes à celles obtenues avec une électrode mousse (Ref :A) et la durée de vie en cyclage à 40°C est nettement améliorée : de 117 cycles avec 0,7% de styrène acrylate (Ref :B) à 423 cycles avec 0,7% d'EVA (Ref :E).

## Revendications

1. Electrode positive plastifiée comprenant un support conducteur métallique et une pâte comprenant une matière électrochimiquement active et un liant ;
- le liant comprenant au moins un copolymère d'éthylène-acétate de vinyle représentant 0,25-1% en poids du poids de ladite pâte,
- le liant ne comprenant ni polystyrène, ni copolymère de butadiène.

2. Electrode selon la revendication 1, dans laquelle le copolymère d'éthylène-acétate de vinyle représente au moins 30%, de préférence au moins 50%, de préférence au moins 75 %, de préférence encore au moins 80%, de préférence encore au moins 90%, de préférence encore au moins 95% du poids du liant.

3. Electrode selon la revendication 1 ou 2, dans laquelle le pourcentage en poids du groupe acétate de vinyle représente 10-95%, de préférence 50-95%, de préférence encore 70-90% du poids du copolymère d'éthylène-acétate de vinyle.

4. Electrode selon l'une des revendications précédentes, dans laquelle le copolymère d'éthylène-acétate de vinyle représente de 0,25-0,8% en poids, de préférence 0,25-0,5 % en poids du poids de ladite pâte.

5. Electrode selon l'une des revendications précédentes, dans laquelle le liant contient un polymère fluoré.

6. Electrode selon la revendication 5, dans laquelle le polymère fluoré est le polytétrafluoroéthylène.

7. Electrode selon l'une des revendications précédentes, dans laquelle le liant contient un polymère à fonction acrylate.

8. Electrode selon la revendication 7, dans laquelle le polymère à fonction acrylate est choisi dans le groupe comprenant un copolymère de styrène-acrylate, un poly(méth)acrylate, un copolymère de styrène-anhydride maléique.

9. Electrode selon l'une des revendications précédentes, dans laquelle le liant contient un composé de type silane.

10. Electrode selon l'une des revendications précédentes, comprenant en outre des fibres.

11. Electrode selon la revendication 10, dans laquelle les fibres sont des fibres de polypropylène.

12. Electrode selon la revendication 10 ou 11, dans laquelle la quantité de fibres ajoutées est inférieure à environ 1,5 % du poids de la pâte.

13. Electrode selon l'une des revendications précédentes, dans laquelle le collecteur de courant est bidimensionnel.

14. Electrode selon l'une des revendications précédentes, dans laquelle l'électrode est l'électrode positive d'un accumulateur alcalin.

15. Electrode selon la revendication 14, dans laquelle la matière électrochimiquement active est un composé à base d'hydroxyde de nickel.

16. Accumulateur à électrolyte alcalin comprenant une électrode selon l'une quelconque des revendications précédentes.

## Claims

1. Positive plasticized electrode comprising a conductive metal support and a paste comprising an electrochemically-active material and a binder;
- the binder comprising at least an ethylene-vinyl acetate copolymer representing 0.25-1% by weight of the weight of said paste,
- the binder comprising neither polystyrene nor butadiene copolymer.

2. Electrode according to claim 1, in which the ethylene-vinyl acetate copolymer represents at least 30%, preferably at least 50%, preferably at least 75%, even more preferably at least 80%, even more preferably at least 90%, even more preferably at least 95% of the weight of the binder.

3. Electrode according to claim 1 or 2, in which the percentage by weight of the vinyl acetate group represents 10-95%, preferably 50-95%, even more preferably 70-90% of the weight of the ethylene vinyl acetate copolymer.

4. Electrode according to any one of the preceding claims, in which the ethylene-vinyl acetate copolymer represents 0.25-0.8% by weight, preferably 0.25-0.5% by weight, of the weight of said paste.

5. Electrode according to any one of the preceding claims, in which the binder contains a fluorinated polymer.

6. Electrode according to claim 5, in which the fluorinated polymer is polytetrafluoroethylene.

7. Electrode according to any one of the preceding claims, in which the binder contains a polymer with an acrylate function.

8. Electrode according to claim 7, in which the polymer with an acrylate function is chosen in the group comprising a styrene-acrylate copolymer, a poly(meth)acrylate, a styrene-maleic anhydride copolymer.

9. Electrode according to any one of the preceding claims, in which the binder contains a compound of silane type.

10. Electrode according to any one of the preceding claims, additionally comprising fibres.

11. Electrode according to claim 10, in which the fibres are polypropylene fibres.

12. Electrode according to claim 10 or 11, in which the quantity of fibres added is less than approximately 1.5% of the weight of the paste.

13. Electrode according to any one of the preceding claims, in which the current collector is two-dimensional.

14. Electrode according to any one of the preceding claims, in which the electrode is the positive electrode of an alkalinesecondary cell.

15. Electrode according to claim 14, in which the electrochemically-active material is a compound based on nickel hydroxide.

16. Alkaline electrolyte secondary cell comprising an electrode according to any one of the preceding claims.

## Patentansprüche

1. Plastifizierte positive Elektrode, die einen metallischen leitenden Träger und eine Paste umfasst, die ein elektrochemisch aktives Material und ein Bindemittel umfasst;
- wobei das Bindemittel mindestens ein Ethylen-Vinylacetat-Copolymer umfasst, das 0,25 - 1 Gew.-% des Gewichts der Paste ausmacht,
- wobei das Bindemittel weder Polystyrol noch Butadien-Copolymer umfasst.

2. Elektrode nach Anspruch 1, wobei das Ethylen-Vinylacetat-Copolymer mindestens 30 %, vorzugsweise mindestens 50 %, vorzugsweise mindestens 75 %, mehr bevorzugt mindestens 80 %, mehr bevorzugt mindestens 90 %, mehr bevorzugt mindestens 95 % des Gewichts Bindemittels ausmacht.

3. Elektrode nach Anspruch 1 oder 2, wobei der Gewichtsprozentanteil der Vinylacetatgruppe 10 - 95 %, vorzugsweise 50 - 95 %, mehr bevorzugt 70 - 90 % des Gewichts des Ethylen-Vinylacetat-Copolymers ausmacht.

4. Elektrode nach einem der vorhergehenden Ansprüche, wobei das Ethylen-Vinylacetat-Copolymer 0,25 - 0,8 Gew.-%, vorzugsweise 0,25 - 0,5 Gew.-% des Gewichts der Paste ausmacht.

5. Elektrode nach einem der vorhergehenden Ansprüche, wobei das Bindemittel ein fluoriertes Polymer enthält.

6. Elektrode nach Anspruch 5, wobei es sich bei dem fluorierten Polymer um Polytetrafluorethylen handelt.

7. Elektrode nach einem der vorhergehenden Ansprüche, wobei das Bindemittel ein Polymer mit Acrylatfunktion enthält.

8. Elektrode nach Anspruch 7, wobei das Polymer mit Acrylatfunktion aus der Gruppe ausgewählt ist, die ein Styrol-Acrylat-Copolymer, ein Poly(meth)acrylat, ein Styrol-Maleinsäureanhydrid-Copolymer umfasst.

9. Elektrode nach einem der vorhergehenden Ansprüche, wobei das Bindemittel eine Verbindung des Silantyps enthält.

10. Elektrode nach einem der vorhergehenden Ansprüche, die außerdem Fasern umfasst.

11. Elektrode nach Anspruch 10, wobei es sich bei den Fasern um Polypropylenfasern handelt.

12. Elektrode nach Anspruch 10 oder 11, wobei die Menge der zugesetzten Fasern weniger als ungefähr 1,5 % des Gewichts der Paste ist.

13. Elektrode nach einem der vorhergehenden Ansprüche, wobei der Stromkollektor zweidimensional ist.

14. Elektrode nach einem der vorhergehenden Ansprüche, wobei es sich bei der Elektrode um die positive Elektrode eines alkalischen Akkumulators handelt.

15. Elektrode nach Anspruch 14, wobei es sich bei dem elektrochemisch aktiven Material um eine Verbindung auf Nickelhydroxid-Basis handelt.

16. Akkumulator mit alkalischem Elektrolyt, der eine Elektrode nach einem der vorhergehenden Ansprüche umfasst.
